(19) Europäisches Patentamt

European Patent Office

Office européen des brevets

(11) **EP 0 795 241 B1**

(12) **FASCICULE DE BREVET EUROPEEN**

(45) Date de publication et mention
de la délivrance du brevet:
**20.12.2006 Bulletin 2006/51**

(21) Numéro de dépôt: **96933484.6**

(22) Date de dépôt: **03.10.1996**

(51) Int Cl.:
***H04L 9/32*** *(2006.01)*

(86) Numéro de dépôt international:
**PCT/FR1996/001546**

(87) Numéro de publication internationale:
**WO 1997/013342 (10.04.1997 Gazette 1997/16)**

(54) **PROCEDE DE CRYPTOGRAPHIE A CLE PUBLIQUE BASE SUR LE LOGARITHME DISCRET**

AUF DEM DISKRETEN LOGARITHMUS BASIERENDES VERSCHLÜSSELUNGSVERFAHREN MIT ÖFFENTLICHEM SCHLÜSSEL

PUBLIC KEY CRYPTOGRAPHY PROCESS BASED ON THE DISCRETE LOGARITHM

(84) Etats contractants désignés:
**DE ES GB IT**

(30) Priorité: **03.10.1995 FR 9511622**

(43) Date de publication de la demande:
**17.09.1997 Bulletin 1997/38**

(73) Titulaire: **GEMPLUS**
**13881 Gémenos Cédex (FR)**

(72) Inventeurs:
• **M'RAIHI, David**
**F-75011 Paris (FR)**
• **NACCACHE, David**
**F-75009 Paris (FR)**
• **STERN, Jacques**
**F-75013 Paris (FR)**
• **VAUDENAY, Serge**
**F-75004 Paris (FR)**

(56) Documents cités:
• **ADVANCES IN CRYPTOLOGY - EUROCRYPT '92. WORKSHOP ON THE THEORY AND APPLICATIONS OF CRYPTOGRAPHIC TECHNIQUES. PROCEEDINGS, BALATONFURED, HUNGARY, 24-28 MAY 1992, ISBN 3-540-56413-6, 1993, BERLIN, GERMANY, SPRINGER-VERLAG, GERMANY, pages 200-207, XP000577415 BRICKELL E F ET AL: "Fast exponentiation with precomputation"**
• **AT&T TECHNICAL JOURNAL, NOV.-DEC. 1991, USA, vol. 70, no. 6, ISSN 8756-2324, pages 73-86, XP000256991 BRICKELL E F ET AL: "Interactive identification and digital signatures"**
• **JOURNAL OF CRYPTOLOGY, 1991, USA, vol. 4, no. 3, ISSN 0933-2790, pages 161-174, XP002006211 SCHNORR C P: "Efficient signature generation by smart cards"**

**Description**

La présente invention a pour objet un procédé de cryptographie dite à clé publique basé sur le logarithme discret faisant intervenir le calcul d'une grandeur modulo p.

Elle trouve une application dans la génération de signatures numériques de messages, ou dans une cession d'authentification entre deux entités .

Dans de telles procédures, la sécurité est fondée sur l'extrême difficulté qu'il y a à inverser certaines fonctions et plus particulièrement le logarithme discret.

Ce problème consiste, étant donné la relation mathématique $y = g^x$, modulo p que l'on notera par la suite $y = g^x \bmod p$ (qui signifie y est le reste de la division de $g^x$ par p), à retrouver x lorsque l'on connaît p, g et y. Ce problème est impossible à résoudre, en l'état actuel des connaissances, dès que la taille p atteint ou dépasse 512 bits et que celle de x atteint ou dépasse 128 bits.

Dans de tels systèmes, il existe en général une autorité qui fournit le nombre p de grande taille, constituant le module. L'autorité choisit également un entier g, appelé base tel que l'ensemble engendré par g c'est-à-dire l'ensemble formé des nombres $g^x \bmod p$, pour x appartenant à l'intervalle [0, p-1] soit un sous-ensemble de taille maximale, au moins $2^{128}$.

Les paramètres p et g sont dits "publics" c'est-à-dire qu'ils sont fournis par l'autorité à tous les utilisateurs rattachés à cette autorité.

Selon certaines variantes, ces paramètres sont choisis individuellement par chaque utilisateur et font, dans ce cas, partie intégrante de sa clé publique.

Un inconvénient majeur à la mise en oeuvre de systèmes cryptographiques réside dans la nécessité d'avoir des moyens de calcul et de mémorisation relativement importants du fait des calculs complexes qui sont réalisés.

En effet, le calcul de la grandeur $g^k \bmod p$ consiste à réaliser des multiplications modulaires et cela est coûteux en temps de calcul et en place mémoire. Dans des dispositifs électroniques simples n'utilisant que des microprocesseurs standards, ce type d'opération n'est guère réalisable.

Pour des dispositifs électroniques possédant un processeur spécialisé pour ce type de calcul, il est malgré tout souhaitable de limiter, le temps de calcul et la place mémoire nécessaire pour les résultats intermédiaires.

En effet, le calcul de la grandeur $g^k \bmod p$ est en général relativement coûteux par la méthode classique du "carré-multiplié" connue sous l'abréviation anglosaxonne SQM (Square-Multiply) puisqu'il équivaut en moyenne à 3/2 $\mathrm{Log}_2(p)$ multiplications.

Selon cette méthode on calcule toutes les puissances de g c'est à dire, lorsque k est de longueur n bits, tous les carrés :

$$g^{2^0}, \ g^{2^1}, \quad \ldots \quad g^{2^n},$$

Selon la méthode du "carré multiplié" simple $g^k$ requiert n/2 multiplications et n carrés.

Une méthode proposée par E. BRICKELL et al. dénommée par l'abréviation BGCW permet de réduire le nombre de multiplications dans le cas de la méthode du carré-multiplié mais introduit un besoin de stockage de nombreuses constantes précalculées et donc la nécessité de disposer d'une quantité de mémoires de stockage très pénalisante.

Cette méthode est décrite dans l'article de E. BRICKELL: "Fast Exponentiation with Precomputation", EUROCRYPT'92, p.200-207. Un exposant n est choisi de manière aléatoire et une décomposition en combinaison linéaire n = Σ ai xi, 0 ≤ i ≤ m-1 est cherchée. Des puissances $g^{xi}$ sont précalculées et mises en mémoire. Finalement la fonction exponentielle $g^n$ est calculée par combinaison de puissances.

La présente invention a pour objet de remédier à tous- ces inconvénients-. Elle permet d'apporter une solution souple et peu onéreuse en temps de calcul et en place mémoire à la mise en oeuvre d'algorithmes cryptographiques pour tous systèmes de cryptographie et en particulier par des appareils portables du type carte à puce à microprocesseur.

Selon l'invention deux solutions sont proposées. Les deux solutions sont basées sur un principe commun consistant à constituer une base de données de valeurs aléatoires et à combiner ces valeurs pour déterminer des exposants k servant aux échanges entre deux entités.

Avec les deux solutions proposées, le calcul d'un exposant k requiert moins de 30 multiplications modulaires pour un espace mémoire tout à fait acceptable pour des supports tels que les cartes à puce.

L'invention a plus particulièrement pour objet un procédé de cryptographie à clé publique basé sur le logarithme discret faisant intervenir le calcul de la grandeur $r = g^k \bmod p$ ou p est un nombre premier appelé module, l'exposant k un nombre aléatoire habituellement de longueur N bits et g un entier appelé base, dans lequel les étapes sont définies par la revendication 1.

Selon un premier mode de réalisation, les étapes consistent à:

- former une base de données fixe contenant m valeurs $x_i$ aléatoires et les grandeurs correspondantes $z_i$ telles que $z_i = g^{xi}$ modp,
- générer un exposant k nécessaire à chaque signature en opérant une combinaison linéaire aléatoire des valeurs $x_i$ de la base,
- calculer la grandeur $g^k$ modp à partir des grandeurs $z_i$ relatives aux valeurs $x_i$ intervenant dans la combinaison,
- utiliser cette grandeur dans les échanges de signaux avec une autre entité.

Selon un deuxième mode de réalisation, les étapes consiste à :

- former une base de données évolutive contenant n valeurs aléatoires d'exposants et leur puissance ($k_i$, $g^{ki}$ modp)
- générer un nouvel exposant $k_{i+1}$ nécessaire à une signature en opérant une combinaison linéaire aléatoire des n valeurs $k_i$ ,
- calculer la grandeur $g^{ki+1}$ modp en réalisant le produit des puissances de $g^k$ de la combinaison linéaire,
- mettre à jour la base des exposants et des puissances,
- utiliser cette grandeur dans les échanges de signaux avec une autre entité.

D'autres particularités et avantages de l'invention apparaîtront à la lecture de la description qui est faite et qui est donnée à titre d'exemple illustratif et non limitatif en regard des dessins qui représentent :

- la figure 1, un schéma de principe d'un système apte à mettre en oeuvre l'invention,

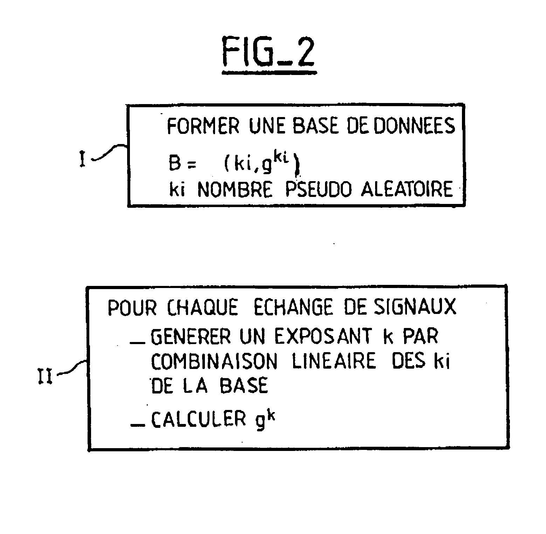

- la figure 2, un schéma fonctionnel représentant les étapes essentielles du procédé selon l'invention,

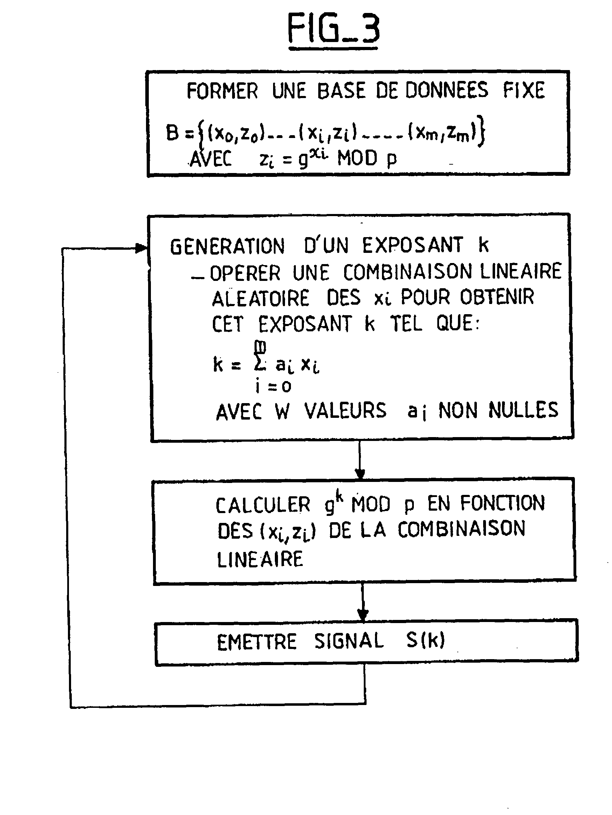

- la figure 3, le schéma fonctionnel selon un premier mode de réalisation,

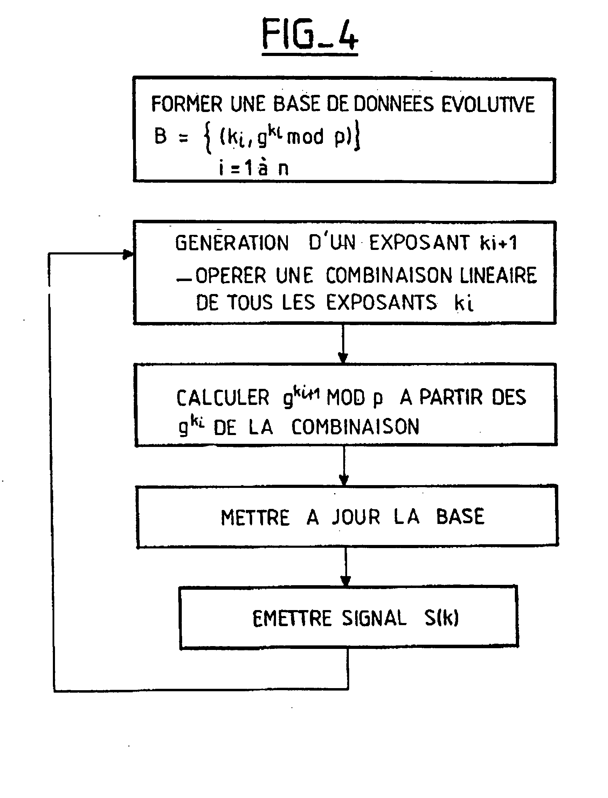

- la figure 4, le schéma fonctionnel selon un deuxième mode de réalisation.

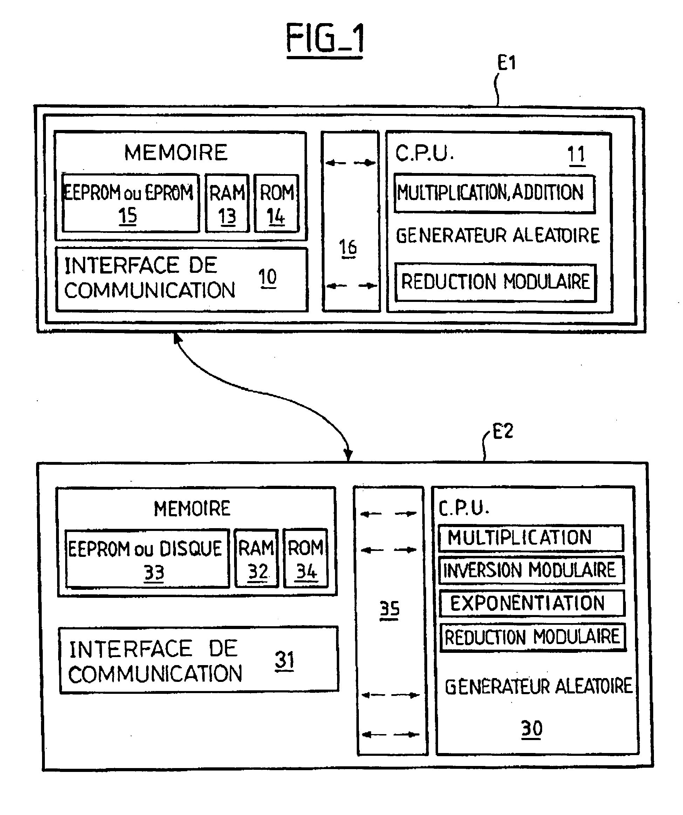

On a représenté sur la figure 1, un schéma de principe d'un système de mise en oeuvre du procédé de cryptographie objet de l'invention.

Ce système est formé d'une entité E1 désirant effectuer des échanges de signaux électroniques avec au moins une autre entité E2. les-deux entités sont munies respectivement d'une unité de traitement (CPU) 11, 30, d'une interface de communication, d'une mémoire vive (RAM) 13, 32 et/ou d'une mémoire non inscriptible (ROM) 14, 34 et/ou d'une mémoire non volatile inscriptible ou réinscriptible (EPROM ou EEPROM) 15, 33 et un bus d'adresses, de données, de contrôle 16, 35.

L'unité de commande de traitement et/ou la ROM contiennent des programmes ou des ressources de calcul correspondant à l'exécution des étapes de calcul intervenant dans le procédé objet de l'invention, c'est-à-dire lors d'une session d'authentification ou lors de la génération d'une signature électronique ou au cours des quelles les deux entités s'échangent des signaux électroniques.

L'unité de traitement ou la ROM possèdent les ressources nécessaires à des multiplications, additions et réductions modulaires.

De même que l'unité de traitement et/ou la ROM comportent les fonctions de cryptographie utilisées propres à chaque algorithme de cryptographie et les paramètres g et p, nécessaires au calcul et fixés un fois pour toute pour la suite. Les exposants $x_i$ selon le premier mode ou $k_i$ selon le deuxième mode pourront être chargés au préalable dans une mémoire réinscriptible, par l'autorité ou, générés à partir d'un générateur aléatoire et d'une valeur aléatoire source $x_0$ (ou $k_0$) secrète. Chaque entité E1, E2 possède en outre une clé secrète x et la clé publique y.

L'invention s'applique tout particulièrement aux systèmes à cryptographie mis en place dans le domaine bancaire où une grande sécurité est requise lors de transactions opérées sur les comptes.

C'est aussi le cas où l'on désire authentifier l'envoi de messages transmis sous forme de signaux électroniques envoyés par une autre entité.

C'est aussi le cas où l'on a besoin de signer des messages lors d'échanges de signaux avec une autre entité.

En pratique, l'entité désireuse de réaliser une transaction pourra être, par exemple, une carte à circuit intégré telle qu'une carte à puce et l'entité destinataire sera alors un terminal bancaire.

La suite de la description va être faite dans le cadre de l'application du procédé à la signature de messages numériques, étant bien entendu que l'invention s'applique à tout système de cryptographie basé sur le logarithme discret.

La figure 1, illustre les étapes essentielles du procédé. Selon l'invention on forme une base de données contenant un nombre fixe d'exposants et les puissances correspondantes, puis pour chaque échange de signaux:

- on génère un exposant en opérant une combinaison linéaire aléatoire des valeurs d'exposant de la base,
- et on calcule la puissance de g à partir des puissances de la base entrant dans la combinaison.

Le procédé selon l'invention propose deux solutions reposant toutes deux sur la formation (ou constitution) de cette base de données.

Selon le premier mode de réalisation, la base est fixe et est formée d'un ensemble de m couples $(x_i, z_i)$. Les données $x_i$ sont des nombres aléatoires obtenus comme dit précédemment par un générateur de nombres aléatoires ou pseudo-aléatoires. La longueur de ces nombres est celle d'un exposant k et est la même pour tous ( soit N bits ). Les grandeurs $z_i$ sont le résultat d'un calcul préalable tel que :

$$z_i = g^{x_i} mod p.$$

La longueur des grandeurs $z_i$ est celle du modulo p.

Lorsque l'entité E1 possède cette base de données $B = [(x_0, z_0), ... (x_{m-1}, -z_{m-1})]$, elle peut échanger des signaux avec une autre entité en faisant intervenir par exemple une signature DSA (r, s) telle que $r = g^k mod p$ dans laquelle k a été généré à partir des données de la base B.

Ainsi selon l'invention, l'entité génère un exposant k lorsque cela est nécessaire et elle le fait en réalisant une combinaison linéaire aléatoire des valeurs $x_i$ de la base. L'entité calcule ensuite la grandeur $g^k mod p$ correspondante.

Pour la génération de l'exposant k, l'entité procède de la manière suivante :

- l'entité génère une séquence de valeurs $a_i$: $(a_0, ..., a_{m-1})$ qui sont des nombres entiers aléatoires tels que $0 \leq a_i \leq h$ et parmi lesquels w valeurs seulement sont non nulles.
- l'entité génère k de sorte_que :

$$k = \sum_{i=0}^{m-1} a_i x_i$$

- l'entité calcule ensuite la grandeur $g^k mod p$ en opérant les multiplications des puissances de g données par les valeurs $z_i$ relatives aux $x_i$ qui entrent dans la combinaison linéaire. En pratique les $x_i$ entrant dans la combinaison linéaire sont ceux pour lesquels le coefficient $a_i$ est non nul.

On utilise l'algorithme de BRICKELL et al. pour réaliser ce calcul, mais le nombre de multiplications est désormais (h/h+1) w + h-2 au lieu de

$$(h/h+1) \ m \ + \ h-2.$$

Le nombre w est fixé par rapport à la sécurité requise et conduit aux résultats suivants pour des valeurs de m et h :

$$m=32, \ w=24 \ et \ h=8$$

$$m=64, \ w=20 \ et \ h=6$$

4

Ces valeurs sont données à titre d'exemple et on peut envisager diverses combinaisons dès lors que l'on respecte les contraintes de sécurité.

Dans le cas où m=64 et w=20, le nombre de multiplications nécessaires selon l'invention est de 34 alors qu'avec une méthode telle que BRICKELL on aurait 60 multiplications à réaliser.

Pour m=32, on stocke par conséquent 32 nombres de taille du module p soit 512 à 1024 bits suivant le cas et 32 nombres de 160 bits (N=160).

Les m couples $(x_i, z_i)$ seront stockés en mémoire EEPROM dans le cas où l'entité est une carte et cela de façon protégé par les méthodes habituelles de blindage et analogue.

La deuxième solution proposée selon l'invention consiste à former une base de données évolutive à partir de n valeurs aléatoires d'exposants $k_i$, i=1 à n et de leur puissance $g^{ki}$ modp.

Une première nouvelle valeur d'exposant $k_{i+1}$ est ensuite obtenue par combinaison linéaire aléatoire des exposants de la base. Le calcul de la grandeur $g^{ki+1}$ correspondant à ce nouvel exposant est effectué. Ce nouveau couple est introduit dans la base de données en remplacement du premier.

Un exposant k nécessaire à une signature est obtenu par combinaison linéaire de tous les autres exposants de la base et le contenu de la base est modifié à chaque nouvelle génération d'un exposant.

En effet, on remet à jour la base en remplaçant le premier couple par le dernier obtenu.

Ainsi à 1'-instant t, la base est de la forme:

$$(( k_0, g^{k_0} \bmod p ), ( k_1, g^{k_1} \bmod p ), \ldots$$
$$\ldots, ( k_t, g^{k_t} \bmod p ))$$

on calcule alors $k_{t+1}$ et on met à jour la base qui devient:

$$(( k_1, g^{k_1} \bmod p ), ( k_2, g^{k_2} \bmod p ), \ldots$$
$$\ldots, ( k_t, g^{k_t} \bmod p ), ( k_{t+1}, g^{k_{t+1}} \bmod p ))$$

le processus se répète à chaque calcul d'un nouveau k dans la séquence pseudo aléatoire.

Chaque exposant de la base est une combinaison linéaire exprimé pour la relation suivante :

$$k_t = \sum_{i=0}^{h-1} a_i \, k_{t+i-(h-1)};$$

avec h-1 = n

dans laquelle les coefficients $a_i$ sont des nombres entiers positifs, aléatoires.

Les nombres aléatoires sont obtenus à partir d'une séquence fixe $a_0, \ldots, a_{h-1}$ sur laquelle on effectue une permutation aléatoire.

Ainsi, la génération d'un exposant $k_{t+1}$ peut s'exprimer par la relation suivante :

$$k_{t+1} = l_t[k_{(t+i-(h-1))}, \ldots, k_t]$$

$l_t$ étant une fonctionnelle linéaire ( linear functional ) à coefficients entiers, choisie au hasard parmi L fonctionnelles.

Les coefficients $a_i$ sont des petites puissances de 2. On choisit des valeurs prises entre 1 et $2^f$ avec f ayant une taille qui permet une implémentation efficace. On choisira par exemple f=7 afin de rester cohérent avec les valeurs proposées par l'algorithme de Schnorr. On prendra donc la suite $0, \ldots, a_{h-1}$ comme une permutation aléatoire de la séquence $(1, 2, \ldots, 2^7)$.

Les coefficients des-combinaisons linéaires doivent être inférieurs à une valeur seuil b pour éviter des attaques et conserver les $k_t$ uniformément distribués et (h-1)-indépendant.

En considérant h et $L=b^h$, on suggère les valeurs h=8 et b=4 et on fixe $L=\{1, \ldots, b\}^h$.

La taille - des nombres k est généralement de 160 bits. Dans ce cas le nombre de multiplications modulaires intervenant selon le procédé de l'invention est nettement inférieur au nombre de multiplications généralement constaté dans l'état de l'art actuel. En effet il est pour les valeurs retenues, inférieur à 30.

**Revendications**

1.  Procédé de cryptographie à clé publique basé sur le logarithme discret au cours duquel on réalise un calcul d'une grandeur $r = g^k \bmod p$ où p est un nombre premier appelé module, k est un nombre aléatoire et g un entier appelé base, le procédé comportant les étapes suivantes consistant à :

    - former une base de données contenant m données aléatoires $x_0, ..., x_{m-1}$, et m puissances correspondantes $z_0, ..., z_{m-1}$ telles que, pour tout i, $z_i = g^{xi} \bmod p$,
    - générer l'exposant aléatoire k en réalisant les sous-étapes suivantes :

        * générer m valeurs $a_0, ..., a_{m-1}$, dont seulement w valeurs choisies aléatoirement parmi les m valeurs sont non nulles,

        * calculer k en opérant une combinaison linéaire aléatoire des données aléatoires de la base de données selon la relation $k = \displaystyle\sum_{i=0}^{i=m-1} a_i \, x_i \, ,$

    - et calculer $g^k \bmod p$ par une combinaison des puissances correspondant aux données aléatoires $x_i$ entrant dans la combinaison.

2.  Procédé de cryptographie selon la revendication 1, **caractérisé en ce que** l'étape de formation de la base de données comprend les sous-étapes suivantes :

    - générer m valeurs aléatoires $x_i$ de N bits à partir d'un générateur pseudo-aléatoire, et d'une valeur initiale secrète $x_0$,
    - calculer la grandeur $z_i = g^{xi} \bmod p$ en réalisant le produit des puissances de g modulo p entrant dans la combinaison linéaire selon laquelle peut être décomposée une valeur $x_i$,
    - stocker en mémoire non volatile de l'entité les m couples $(x_i, z_i)$.

3.  Procédé de cryptographie a clé publique selon la revendication 1, **caractérisé en ce que** les étapes consistent à :

    - former une base de données évolutive contenant n valeurs aléatoires d'exposants et de leur puissance $(k_i, g^{ki} \bmod p)$,
    - générer un nouvel exposant $k_{i+1}$ nécessaire à une signature en opérant une combinaison linéaire aléatoire de n valeurs $k_i$ de la base,
    - calculer la grandeur $g^{ki+1} \bmod p$ en réalisation le produit des puissances de g entrant dans la combinaison linéaire,
    - mettre à jour la base en remplaçant un couple par ce nouveau couple,
    - utiliser cette grandeur dans les échanges de signaux avec une autre entité.

4.  Procédé de cryptographie selon la revendication 3, **caractérisé en ce que** pour un exposant $k_t$ de la base, cet exposant est une combinaison linéaire de la forme :

$$k_t = \sum_{i=0}^{h-1} a_i k_{t+i-(h-1)}$$

avec h-1 = n
et dans laquelle les coefficients $a_i$ sont des nombres entiers positifs aléatoires.

5. Procédé de cryptographie selon la revendication 3, **caractérisé en ce que** les coefficients $a_i$, i=0 à h-1 sont obtenus par une permutation aléatoire d'une séquence fixe.

6. Procédé de cryptographie selon la revendication 5, **caractérisé en ce qu'**un nouvel exposant $k_{t+1}$ est une combinaison linéaire des autres exposants s'exprimant par la relation :

$$k_{t+1} = I_t\left(k_{t+i-(h-1)}, \ldots, k_t\right)$$

Et $I_t$ une fonctionnelle linéaire.

7. Procédé de cryptographie selon l'une quelconque des revendications précédentes **caractérisé en ce qu'**il peut être mis en oeuvre pour des cartes à microprocesseur.

**Claims**

1. Public key cryptographic method based on the discrete logarithm during which the calculation of a magnitude r = $g^k$modp is performed, where p is a prime number called modulus, k is a random number and g is an integer called base, the method comprising the following steps consisting of:

   - creating a database containing m random data $x_0$, ..., $x_{m-1}$, and m matching potencies $z_0$, ..., $z_{m-1}$, so that, for every i, $z_i = g^{xi}$ mod p,
   - generating the random exponent k by performing the following sub-steps:
   - generating m values $a_0$, ..., $a_{m-1}$, in which only w randomly chosen values among the m values are not zero,
   - calculating k by implementing a random linear combination of the random data of the database according to the relation

$$k = \sum_{i=0}^{i=m-1} a_i x_i ,$$

   - and calculating $g^k$ mod p by means of a combination of potencies corresponding to the random data $x_i$ that come into the combination.

2. Cryptographic method according to claim 1, **characterised in that** the step of creating the database comprises the following sub-steps:

   - generating m N-bit random values xi based on a pseudo-random generator, and a secret initial value $x_0$,
   - calculating the magnitude $z_i = g^{xi}$modp by working out the result of the potencies of g modulo p that come into the linear combination according to which a value $x_i$ can be broken down,
   - storing the m couples $(x_i, z_i)$ in a non-volatile memory of the entity.

3. Public key cryptographic method according to claim 1, **characterised in that** the steps consist of:

   - forming an evolving database containing n random values of exponents and their potencies $(k_i, g^{ki}modp)$,
   - generating a new exponent $k_{i+1}$ necessary for a signature implementing a random linear combination of n values $k_i$ of the database,
   - calculating the magnitude $g^{ki+1}$modp by working out the result of the potencies of g that come into the linear combination,
   - updating the database by replacing one couple with this new couple,
   - using this magnitude in signal exchanges with another entity.

4. Cryptographic method according to claim 3, **characterised in that**, for an exponent $k_t$ of the database, this exponent is a linear combination with the following form:

$$k_t = \sum_{i=0}^{h-1} a_i k_{t+i-(h-1)}$$

where h-1 = n
and in which the coefficients $a_i$ are random, positive integers.

5. Cryptographic method according to claim 3, **characterised in that** the coefficients $a_i$, i=0 to h-1 are obtained by a random permutation of a fixed sequence.

6. Cryptographic method according to claim 5, **characterised in that** a new exponent $k_{t+1}$ is a linear combination of other exponents, expressed by the relation:

$$k_{t+1} = I_t \left( k_{t+i-(h-1)}, \ldots, k_t \right)$$

And $I_t$ is a linear functional.

7. Cryptographic method according to any one of the preceding claims, **characterised in that** it can be implemented by cards with microprocessors.

**Patentansprüche**

1. Kryptographie-Verfahren mit öffentlichem Schlüssel, basierend auf dem diskreten Logarithmus, in dessen Verlauf eine Berechnung einer Größe r = $g^k$modp realisiert wird, in der p eine Modul genannte Primzahl ist, k eine zufällige Zahl ist und g eine Bank genannte ganze Zahl ist, wobei das Verfahren die folgenden Schritte umfasst, die aus Folgendem bestehen:

   - eine m zufällige Daten $x_0$, ... , $x_{m-1}$ und m entsprechende Potenzen $z_0$, ..., $z_{m-1}$ wie zum Beispiel für jedes i, $z_i = g^{xi}$ mod p, enthaltende Datenbank bilden,
   - den zufälligen Exponenten k durch Realisierung der folgenden Unterschritte erzeugen:

   * m Werte $a_o$, ..., $a_{m-1}$ erzeugen, von denen nur w zufällig aus den m Werten ausgewählte Werte ungleich Null sind,
   * k durch Durchführen einer zufälligen linearen Kombination der zufälligen Daten der Datenbank gemäß der Relation

$$k = \sum_{i=0}^{i=m-1} a_i x_i ,$$

   berechnen,

   - und $g^k$ mod p durch eine Kombination der den in die Kombination eintretenden zufälligen Werten $x_i$ entsprechenden Potenzen berechnen.

2. Kryptographieverfahren gemäß Anspruch 1, **dadurch gekennzeichnet, dass** der Bildungsschritt der Datenbank den folgenden Unterschritten entspricht:

   - m zufällige Werte $x_i$ von N Bits ausgehend von einem pseudo-zufälligen Generator und einem geheimen anfänglichen Wert $x_0$ erzeugen,

- die Größe $z_i = g^{x_i} \bmod p$ durch Realisierung des Produkts der in die lineare Kombination eintretenden Potenzen von g modulo p berechnen, nach der ein Wert $x_i$ aufgelöst werden kann,
- die Einheit der m Paare $(x_i, z_i)$ im nicht flüchtigen Speicher speichern.

3. Kryptographieverfahren mit öffentlichem Schlüssel gemäß Anspruch 1, **dadurch gekennzeichnet, dass** die Schritte aus Folgendem bestehen:

- eine n zufällige Exponentenwerte und ihre Potenz $(k_i, g^{k_i} \bmod p)$ enthaltende evolutive Datenbank bilden,
- einen neuen, für eine Unterschrift notwendigen Exponenten $k_{i+1}$ durch Vornehmen einer zufälligen linearen Kombination von n Werten $k_i$ der Bank erzeugen,
- die Größe $g^{k_{i+1}} \bmod p$ durch Realisierung des Produkts der in die lineare Kombination eintretenden Potenzen von g berechnen,
- die Bank durch Ersatz eines Paars durch dieses neue Paar aktualisieren,
- diese Größe in dem Zeichenaustausch mit einer anderen Einheit einsetzen.

4. Kryptographieverfahren gemäß Anspruch 3, **dadurch gekennzeichnet, dass** dieser Exponent bei einem Exponenten $k_t$ der Bank eine lineare Kombination der Form

$$k_t = \sum_{i=0}^{h-1} a_i k_{t+i-(h-1)}$$

wobei h-1 = n ist
ist und in der die Koeffizienten $a_1$ zufällige positive ganze Zahlen sind.

5. Kryptogrphieverfahren gemäß Anspruch 3, **dadurch gekennzeichnet, dass** die Koeffizienten $a_1$, i=0 bis h-1 durch eine zufällige Permutation einer festen Sequenz erhalten werden.

6. Kryptographieverfahren gemäß Anspruch 5, **dadurch gekennzeichnet, dass** ein neuer Exponent $k_{t+1}$ eine lineare Kombination der anderen sich durch die Relation:

$$k_{t+1} = I_t\left(k_{t+i-(h-1)}, \ldots, k_t\right)$$

ausdrückenden Exponenten ist und $I_t$ eine lineare Funktionale ist.

7. Kryptographieverfahren gemäß einem der vorherigen Ansprüche, **dadurch gekennzeichnet, dass** es für Mikroprozessorkarten umgesetzt werden kann.

## FIG_1

E1

MEMOIRE

| EEPROM ou EPROM 15 | RAM 13 | ROM 14 |

INTERFACE DE COMMUNICATION 10

16

C.P.U. 11

MULTIPLICATION, ADDITION

GENERATEUR ALEATOIRE

REDUCTION MODULAIRE

E2

MEMOIRE

| EEPROM ou DISQUE 33 | RAM 32 | ROM 34 |

INTERFACE DE COMMUNICATION 31

35

C.P.U.

MULTIPLICATION

INVERSION MODULAIRE

EXPONENTIATION

REDUCTION MODULAIRE

GENERATEUR ALEATOIRE

30

# FIG_2

I ~
┌─────────────────────────────────────┐
│ FORMER UNE BASE DE DONNEES           │
│                                      │
│ $B = (ki, g^{ki})$                   │
│ ki NOMBRE PSEUDO ALEATOIRE           │
└─────────────────────────────────────┘

II ~
┌─────────────────────────────────────┐
│ POUR CHAQUE ECHANGE DE SIGNAUX       │
│   _ GENERER UN EXPOSANT k PAR         │
│     COMBINAISON LINEAIRE DES ki       │
│     DE LA BASE                        │
│                                      │
│   _ CALCULER $g^k$                    │
└─────────────────────────────────────┘

# FIG_3

FORMER UNE BASE DE DONNEES FIXE

$B = \{(x_0, z_0) - - - (x_i, z_i) - - - - (x_m, z_m)\}$
AVEC $z_i = g^{x_i}$ MOD p

GENERATION D'UN EXPOSANT k
— OPERER UNE COMBINAISON LINEAIRE
ALEATOIRE DES $x_i$ POUR OBTENIR
CET EXPOSANT k TEL QUE:

$$k = \sum_{i=0}^{m} a_i x_i$$

AVEC W VALEURS $a_i$ NON NULLES

CALCULER $g^k$ MOD p EN FONCTION
DES $(x_i, z_i)$ DE LA COMBINAISON
LINEAIRE

EMETTRE SIGNAL S(k)

# FIG_4

FORMER UNE BASE DE DONNEES EVOLUTIVE
$$B = \left\{ (k_i, g^{k_i} \bmod p) \right\}$$
$$i = 1 \text{ à } n$$

GENERATION D'UN EXPOSANT $k_{i+1}$
— OPERER UNE COMBINAISON LINEAIRE
DE TOUS LES EXPOSANTS $k_i$

CALCULER $g^{k_{i+1}} \bmod p$ A PARTIR DES $g^{k_i}$ DE LA COMBINAISON

METTRE A JOUR LA BASE

EMETTRE SIGNAL S(k)